# FASCICULE DE BREVET EUROPEEN

(11) **EP 3 070 036 B1**
(45) Date de publication et mention de la délivrance du brevet: **17.01.2018**
(21) Numéro de dépôt: 16164297.0
(22) Date de dépôt: 19.11.2012
(51) Int. Cl.: B65H 31/06, B65H 31/14, B65H 31/18, B65H 3/50

(54) **DISPOSITIF D'EMPILAGE POUR OBJETS PLATS EMPILES SUR CHANT ET MACHINE DE TRI POSTAL CORRESPONDANTE**
STAPELVORRICHTUNG FÜR FLACHE GEGENSTÄNDE, DIE AUF KANTE GESTAPELT WERDEN, UND DAZUGEHÖRIGE SORTIERMASCHINE FÜR POST
STACKING DEVICE FOR FLAT OBJECTS STACKED ON EDGE AND CORRESPONDING MAIL SORTING MACHINE

(30) Priorité: 05.12.2011 FR 1161144
(43) Date de publication de la demande: 21.09.2016
(62) Demande divisionnaire de: 12806534.9
(73) Titulaire: Solystic, 92220 Bagneux (FR)
(72) Inventeur: HUGUES, Damien, 26120 CHABEUIL (FR)
(74) Mandataire: Prugneau, Philippe

(56) Documents cités:
- US-A- 3 865 365

## Description

### Domaine technique

L'invention concerne de façon générale un dispositif d'empilage pour objets plats empilés sur chant, ledit dispositif d'empilage comportant au moins un support définissant un plan d'appui apte à recevoir ladite pile d'objets plats en formation selon une trajectoire d'empilage prédéfinie, une palette de retenue portée par une première glissière disposée latéralement par rapport au plan d'appui et sur laquelle la palette de retenue est mobile en translation selon la trajectoire d'empilage entre une position amont et une position aval, la palette de retenue étant de plus escamotable manuellement entre une position de travail dans laquelle elle s'étend au-dessus du plan d'appui jusqu'à une première hauteur de travail et interfère avec la trajectoire d'empilage pour pouvoir recevoir l'appui de la surface d'un objets plat et une position de repos dans laquelle elle n'interfère pas avec la trajectoire d'empilage, la palette de retenue étant couplée à des moyens de freinage agencés pour s'opposer au déplacement de la palette de retenue au cours de l'empilage.

L'invention concerne également une machine de tri postal comprenant des sorties de tri pourvu de dispositifs d'empilage et comportant un tel dispositif d'empilage.

Au sens de l'invention, un objet plat désigne notamment, mais non exclusivement, un envoi postal. Les envois postaux, susceptibles d'être traités grâce à l'installation de traitement de l'invention, peuvent présenter des dimensions variables, mais également des caractéristiques mécaniques variables, en particulier en ce qui concerne leur rigidité. Ces envois postaux peuvent être, entre autres, une lettre simple, un magazine, une enveloppe avec ou sans fenêtre, un journal, ou encore un catalogue présenté dans une enveloppe en matière plastique ou en papier, avec ou sans soufflet.

### Technique antérieure

Ce type de dispositif d'empilage est couramment utilisé, notamment pour les empileurs de machine de tri d'objets postaux comme par exemple dans les US 3,865,365, US 6,572,094 ou EP 1 306 337. A la sortie de ces empileurs, les objets postaux constituent, au fur et à mesure de leur empilage, une pile d'objets postaux sur chant retenue par la palette de retenue associée aux moyens de freinage. Ainsi, les objets postaux s'empilent, serrés les uns contre les autres sur chant. La palette de retenue est par exemple portée par deux tiges orientées selon la trajectoire de constitution de la pile et formant une première glissière. Une fois la pile constituée, ou au cours de la constitution de cette pile, un Opérateur prélève, par poignées successives, les objets postaux pour, par exemple, les placer dans un bac de transport. Souvent, la poignée prélevée ne représente qu'une partie de la pile et le prélèvement est réalisé tout en poursuivant l'empilage des objets postaux suivants. Aussi, pour que la formation de la pile puisse se poursuivre dans de bonnes conditions, il est nécessaire que le prélèvement de la poignée d'objets postaux se fasse tout en maintenant les autres objets postaux sur chant et en pile serrée. Pour ce faire, lorsque la palette de retenue est prévue à droite de la pile en constitution, l'Opérateur place sa main gauche au dessus de l'avant de la pile de sorte que son pouce soit contre la face avant du premier objet postal de la pile et que ses autres doigts soient au-dessus de la pile. Avec ses autres doigts l'Opérateur délimite la poignée d'objets postaux à saisir en rapprochant le haut des objets postaux concernés du haut du premier objet postal de la pile. Une fois la poignée d'objets postaux délimitée par les doigts de la main gauche, l'Opérateur déplace la palette de retenue vers sa position de repos, elle ne maintient donc plus le devant de la pile, cette fonction étant assurée par la main de l'Opérateur et en particulier par le pouce. A ce stade, la stabilité de la pile est fragilisée car le maintien de son premier objet postal n'est assuré que par le pouce, seulement en appui en haut du premier objet postal. Ainsi, il n'est pas rare, notamment pour des objets postaux de grande taille et/ou souples, que le bas du premier objet postal de la poignée, voire des objets postaux suivant, glissent et ripent vers le devant de la pile. L'Opérateur doit alors remettre la poignée en place avant de pouvoir la placer dans le bac de transport. Cette manipulation supplémentaire est consommatrice de temps et source de risques de mauvais positionnements des objets postaux les uns par rapport aux autres, voire de dégradation des objets postaux. Ce type de dispositif d'empilage n'est donc pas satisfaisant.

Un tel dispositif d'empilage est notamment décrit par la publication US 6,572,094 dans laquelle la palette de retenue est montée mobile sur une glissière horizontale par rapport à laquelle elle peut par ailleurs librement pivoter. La palette de retenue est en appui contre la rive de taquage par l'intermédiaire d'un galet rotatif en appui sur une arête de la rive de taquage, inclinée par rapport au plan horizontal recevant les plis sur chant. Ainsi, au fur et à mesure de la constitution de la pile d'objets postaux, l'inclinaison de l'arête provoque l'éloignement progressif du galet du plan horizontal et donc le pivotement de la palette de retenue. Au cours de la constitution de la pile d'objets postaux, la palette de retenue pivote ainsi progressivement. Ce dispositif d'empilage ne permet toutefois pas de répondre au problème soulevé précédemment.

Par ailleurs, la publication EP 1 306 337 décrit un dispositif d'empilage comprenant un mécanisme de freinage de la palette de retenue, apte à s'opposer au déplacement de la palette de retenue lors de la constitution de la pile. Ce mécanisme de freinage est couplé à un mécanisme résistant réglable apte à faire varier la force d'opposition du mécanisme de freinage au déplacement de la palette de retenue. Ce dispositif d'empilage ne permet pas non plus de répondre au problème soulevé précédemment.

Les dispositifs d'empilage décrits par les publications JP 59 036 066, JP 08 002 779, EP 0 659 669, US 5,393,196 ne permettent pas non plus de répondre au problème.

### Exposé de l'invention

Le but de l'invention est de remédier à ces inconvénients en proposant un dispositif d'empilage et une machine de tri postal facilitant et fiabilisant le prélèvement d'une poignée d'objets plats tout en maintenant efficacement le reste de la pile d'objets plats, notamment en évitant que le bas du premier objet plat ne glisse et ne ripe vers le devant de la pile.

A cet effet, l'invention a pour objet un dispositif d'empilage pour objets plats empilés sur chant, comportant au moins un support définissant un plan d'appui apte à recevoir ladite pile d'objets plats en formation selon une trajectoire d'empilage prédéfinie, une palette de retenue portée par une première glissière disposée latéralement par rapport audit plan d'appui et sur laquelle ladite palette de retenue est mobile en translation selon ladite trajectoire d'empilage entre une position amont et une position aval, et escamotable manuellement entre une position de travail dans laquelle elle s'étend au-dessus dudit plan d'appui jusqu'à une première hauteur de travail et interfère avec ladite trajectoire d'empilage pour pouvoir recevoir l'appui de la surface d'un objet plat et une position de repos dans laquelle elle n'interfère pas avec ladite trajectoire d'empilage, ladite palette de retenue étant couplée à des moyens de freinage agencés pour s'opposer au déplacement de ladite palette de retenue au cours de l'empilage, le dispositif d'empilage comprenant en outre au moins un doigt de maintien apte à être dans une position sortie dans laquelle il s'étend au-dessus dudit plan d'appui jusqu'à une seconde hauteur de travail inférieure à ladite première hauteur de travail et interfère avec ladite trajectoire d'empilage pour recevoir l'appui du pied d'un objet plat, ledit doigt de maintien étant porté par une seconde glissière distincte de ladite première glissière, disposée latéralement par rapport audit plan d'appui du même coté que ladite première glissière et sur laquelle ledit doigt de maintien est mobile en translation selon ladite trajectoire d'empilage entre une position arrière et une position avant, ledit doigt de maintien étant couplé à des moyens de rappel tendant à s'opposer au déplacement dudit doigt de maintien de sorte à empêcher le glissement vers l'avant de ladite pile du pied dudit objet plat, ledit doigt de maintien et ladite palette de retenue étant agencés pour être indépendants l'un de l'autre de sorte que ledit doigt de maintien soit apte à retenir ledit pied d'objet plat même lorsque ladite palette de retenue est dans sa position de repos, ledit doigt de maintien en position sortie étant en outre agencé pour être poussé par ladite palette de retenue en position de travail quand celle-ci est déplacée vers sa position aval de sorte que ladite palette de retenue et le doigt de maintien avancent progressivement au fur et à mesure de la constitution de ladite pile d'objets plats à l'arrière de ladite palette de retenue, ledit support étant formé par deux bandes transporteuses parallèles entre elles et distantes l'une de l'autre de sorte à ménager entre elles une zone d'accès apte à recevoir le passage d'une main d'un Opérateur pour accéder par le dessous dudit plan d'appui auxdits objets plats, caractérisé en ce qu'il comporte au moins une courroie d'entrainement prévue sous ledit plan d'appui entre lesdites bandes transporteuses et couplée en déplacement auxdites bandes transporteuses, en ce que ladite palette de retenue comporte une extension agencée pour, dans ladite position de travail de ladite palette de retenue, traverser ledit plan d'appui et être en appui contre ladite courroie d'entrainement de sorte que ladite palette de retenue soit couplée en déplacement à ladite courroie d'entrainement, et en ce que l'un au moins desdits doigt de maintien et palette de retenue comporte une butée agencée pour venir en appui respectivement contre ladite palette de retenue, ledit doigt de maintien, et empêcher le déplacement dudit doigt de maintien vers l'amont de ladite palette de retenue selon ladite trajectoire d'empilage, ledit doigt de maintien étant bloqué avant que sa surface amont ne soit en contact avec la surface aval de la palette de retenue.

L'idée à la base de l'invention est de prévoir, sur le même coté du support que la palette, un doigt de maintien indépendant de la palette de retenue et dont le contact avec les objets plats est limité, de par sa hauteur de travail inférieure à celle de la palette, au pied de chaque premier objet plat. Ainsi le doigt de maintien retient le pied du premier objet plat en l'empêchant de riper vers l'avant, même lorsque la palette est déplacée vers l'arrière de sorte à pouvoir libérer une poignée d'objets plats à saisir, tout en laissant accessible le haut des objets plats pour autoriser leur préhension.

L'idée de l'invention est également de permettre la saisie d'une poignée d'objets plats simultanément par le dessous et par le dessus ;

Le dispositif d'empilage selon l'invention peut avantageusement présenter les particularités suivantes :
- le dispositif d'empilage comporte au moins une courroie d'entrainement prévue sous le plan d'appui entre les bandes transporteuses et couplée en déplacement aux bandes transporteuses, la palette de retenue comporte une extension agencée pour, dans la position de travail de la palette de retenue, traverser le plan d'appui et être en appui contre la courroie d'entrainement de sorte que la palette de retenue soit couplée en déplacement à la courroie d'entrainement ;
- la première glissière et la seconde glissière sont prévues dans un plan de guidage perpendiculaire au plan d'appui ;
- le doigt de maintien est agencé pour, dans une position d'escamotage prévue au-delà de la position avant, être de plus escamotable de la position sortie à une position entrée dans laquelle il n'interfère pas avec la trajectoire d'empilage ;
- le dispositif d'empilage peut comporter au moins une rive de taquage apte à guider latéralement les objets plats selon la trajectoire d'empilage, la une rive de taquage comportant au moins une rainure définissant la seconde glissière ;
- la rainure comporte au moins une encoche latérale apte à recevoir le doigt de maintien dans sa position entrée et définissant la position d'escamotage, le doigt de maintien étant agencé pour pivoter par rapport à un axe sensiblement parallèle à la trajectoire d'empilage entre ses positions sortie et escamotée ;
- les moyens de rappel comportent au moins l'un des éléments choisis dans le groupe comprenant au moins un élément de rappel élastique, un contrepoids.

L'invention a également pour objet une machine de tri postal comprenant des sorties de tri pourvues d'au moins un dispositif d'empilage tel que précédemment décrit.

### Description sommaire des dessins

La présente invention sera mieux comprise et d'autres avantages apparaîtront à la lecture de la description détaillée de deux modes de réalisation pris à titre d'exemples nullement limitatifs et illustrés par les dessins annexés, dans lesquels :
- les figures 1 à 5 sont des vues en perspective du dispositif d'empilage selon un premier mode de réalisation ne faisant pas partie de l'invention avec le doigt de maintien et la palette de retenue dans différentes positions successives ;
- la figure 6 est une vue de coté du dispositif d'empilage des figures 1 à 5 à vide (ne contenant pas d'objet plat) ;
- la figure 7 est une vue en perspective du dispositif d'empilage selon un mode de réalisation de l'invention, à vide et dans une position intermédiaire de la palette de retenue et du doigt de maintien. Sur cette figure, les éléments analogues à ceux des figures 1 à 6 y sont affectés des mêmes numéros de référence, augmentés de 100 ;
- la figure 8 est une vue en perspective de détail du dispositif d'empilage de la figure 7 illustrant notamment la butée interférant entre la palette de retenue et le doigt de maintien.

### Description des modes de réalisation

Le dispositif d'empilage pour objets plats empilés sur chant selon l'invention est par exemple placé au niveau d'une sortie de tri d'une machine de tri postal (non représentée). Cette application spécifique n'est cependant pas limitative.

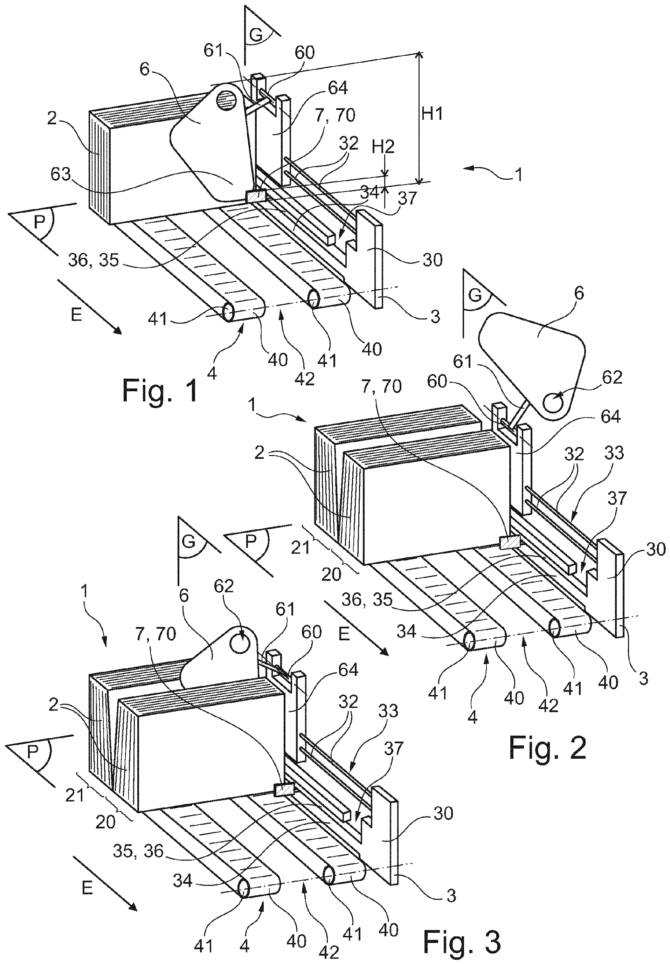

En références aux figures 1 à 6, le dispositif d'empilage 1 pour objets plats 2 empilés sur chant comporte un bâti 3, un support 4 d'objets plats 2, une rive de taquage 34, une palette de retenue 6 et un doigt de maintien 7.

Dans l'exemple illustré, le support 4 est formé par deux bandes transporteuses 40 portées par des poulies 41 mobiles en rotation par rapport au bâti 3 dont seule une partie est représentée. Les bandes transporteuses 40 sont disposées sensiblement parallèlement entre elles de sorte à ce que les axes de leurs poulies 41 soient sensiblement coaxiaux et que leurs brins supérieurs définissent des zones d'appui coplanaires distantes entre elles et définissant un plan d'appui P apte à recevoir la pile d'objets plats 2 sur chant. Les bandes transporteuses 40 définissent entre elles une zone d'accès 42 apte à recevoir le passage d'une main d'un Opérateur pour accéder par le dessous aux objets plats 2 reposant sur le plan d'appui P. Les poulies 41 sont soit folles soit motorisées. Les poulies 41 et bandes transporteuses 40 permettent l'avance de la pile d'objets plats 2 au cours de l'empilage, sur le plan d'appui P, selon une trajectoire d'empilage prédéfinie symbolisée sur les figures par la flèche E. Pour limiter le glissement du chant des objets plats 2 sur les bandes transporteuses 40, ces dernières peuvent par exemple être réalisées dans un matériau rugueux. Le support peut être formé par tout autre élément adapté.

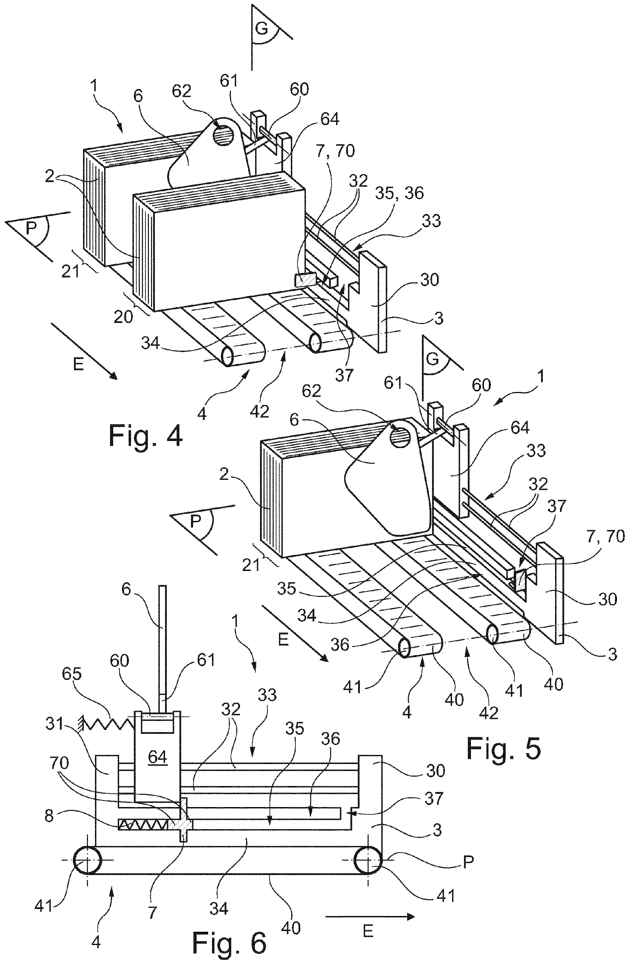

Le bâti 3 comporte une paroi latérale décalée sur le coté du plan d'appui P et présentant une découpe de sorte à former un montant aval 30 et un montant amont 31 entre lesquelles sont fixées deux tiges 32 lisses, sensiblement parallèles entre elles et par rapport à la trajectoire d'empilage E. Ces tiges 32 sont superposées l'une à l'autre dans un plan de guidage G sensiblement perpendiculaire au plan d'appui P. Les tiges 32 sont situées au-dessus du plan d'appui P, donc du même coté que celui destiné à recevoir les objets plats 2. Ces tiges 32 définissent une première glissière 33 par rapport à laquelle coulisse un bras 64 portant la palette de retenue 6. Le bras 64 est formé d'un parallélépipède traversé par deux orifices aptes à recevoir le passage coulissant des tiges 32. La partie supérieure du bras 64 forme un étrier entre les branches duquel est reçu un axe pivotant 60 de la palette de retenue 6. La palette de retenue 6 se présente sous la forme d'une plaque munie d'un levier 61 relié à l'axe pivotant 60. La plaque s'étend dans un plan sensiblement perpendiculaire à la trajectoire d'empilage E. Dans l'exemple décrit, la palette de retenue 6 présente une forme trapézoïdale. Cette forme n'est bien entendue pas limitative. Elle peut être traversée par un orifice 62 prévue vers le levier 61 et facilitant sa manipulation. Elle est mobile dans un plan perpendiculaire au plan d'appui P et au plan de guidage G entre une position de travail (illustrée par les figures 1, 3 à 5) dans laquelle elle est pivotée vers le plan d'appui P, éloignée du plan de guidage G et interfère avec la trajectoire d'empilage E et une position de repos (illustrée par les figures 2 et 6) dans laquelle elle est éloignée du plan d'appui P, rapprochée du plan de guidage G et n'interfère pas avec la trajectoire d'empilage E. Ainsi, dans sa position de travail, la palette de retenue 6 peut être placée à l'avant de la pile d'objet plats 2 ou dans la pile d'objets plats 2 de sorte à recevoir l'appui du premier objet plat 2 de la pile pour retenir sur chant ce premier objet plat 2 ainsi que les objets plats 2 subséquents. Dans sa position de travail, la palette de retenue 6 s'étend au-dessus du plan d'appui P jusqu'à une première hauteur de travail H1 (illustrée sur la figure 1). La hauteur de travail H1 de la palette de retenue 6 étant supérieure à la hauteur des objets plats 2, la palette de retenue 6 s'étend au-dessus du haut des objets plats 2 lorsqu'elle est dans sa position de repos. Ainsi, dans sa position de repos, la palette de retenue 6 n'entrave pas le déplacement des objets plats 2. Par l'intermédiaire de la première glissière 33, la palette de retenue 6 est par ailleurs mobile selon la trajectoire d'empilage E entre une position amont dans laquelle elle peut être placée dans ou à l'arrière de la pile d'objets plats 2, et une position aval dans laquelle elle est placée à l'avant de la pile d'objets plats 2. La palette de retenue 6 est par ailleurs couplée à des moyens de freinage, par exemple un ressort 65 tel que représenté sur la figure 5, aptes à s'opposer au déplacement de la palette de retenue 6, au moins lors de son déplacement de sa position amont à sa position aval La palette de retenue 6 retient ainsi les objets plats 2 empilés derrière elle sur chant.

La partie du bâti 3 reliant le montant aval 30 et le montant amont 31 forme une rive de taquage 34 apte à assurer le guidage latéral des objets plats 2 empilés sur les bandes transporteuses 40. Cette rive de taquage 34 est creusée d'une rainure 35 s'étendant sensiblement parallèlement à la trajectoire d'empilage E et définissant une seconde glissière 36 par rapport à laquelle coulisse le doigt de maintien 7.La seconde glissière 36 est ainsi parallèle à la première glissière 33. Le doigt de maintien 7 présente la forme générale d'un T dont les branches 70 (visibles sur la figure 6) sont logées dans la rainure 35. Ainsi, la seconde glissière 36 est apte à guider le doigt de maintien 7 selon la trajectoire d'empilage E. L'extrémité aval de la rainure 35 est prolongée latéralement par une encoche latérale 37 autorisant le basculement du doigt de maintien 7 entre sa position sortie dans laquelle la tige 71 du T est proéminente de la rive de taquage 34 de sorte à interférer avec la trajectoire d'empilage E et une position entrée dans laquelle la tige 71 du T est escamotée dans l'encoche latérale 37 et n'interfère pas avec la trajectoire d'empilage E. La seconde glissière 36 est placée sous la première glissière 33 dans le plan de guidage G. Ainsi, selon une direction perpendiculaire à la trajectoire d'empilage E, le doigt de maintien 7 est prévu entre le haut de la palette de retenue 6 dans sa position de travail et les bandes transporteuses 40. Lorsqu'il est dans sa position sortie, le doigt de maintien 7 s'étend au-dessus dudit plan d'appui P sur une seconde hauteur de travail H2 (illustrée sur la figure 1) inférieure à la première hauteur de travail H1. Ainsi, lorsque la palette de retenue 6 est dans sa position repos, le doigt de maintien 7 peut recevoir l'appui des objets plats 2 placés derrière lui, cet appui étant limité au pied des objets plats 2. Lorsque la palette de retenue 6 est dans sa position de travail, le doigt de maintien 7 est plaqué devant la palette de retenue 6. Le doigt de maintien 7 est couplé à des moyens de rappel 8 (visibles sur la figure 6) tendant à s'opposer à son déplacement. Ainsi, dans sa position sortie, le doigt de maintien 7 permet de prévenir le glissement vers l'avant du pied du premier objet plat 2 placé derrière le doigt de maintien 7 et des objets plats 2 subséquents. Dans l'exemple illustré, ces moyens de rappel comportent un ressort de traction 8 dont une extrémité est solidaire du doigt de maintien 7 et dont l'autre extrémité est solidaire du bâti 3. Les moyens de rappel peuvent être de tout autre type, par exemple un contrepoids relié au doigt de maintien par un lien souple. Par l'intermédiaire de la seconde glissière 36, le doigt de maintien 7 est par ailleurs mobile selon la trajectoire d'empilage E entre une position arrière (illustrée par la figure 1) dans laquelle il peut être placé sensiblement dans un même plan que la palette de retenue 6 lorsqu'elle est dans sa position amont, et une position avant (illustrée par les figures 2, 3 et 4) dans laquelle il est placé à l'avant de la pile d'objets plats 2 et à l'avant de la palette de retenue 6. Comme il ressort de la figure 6, dans l'exemple illustré, le doigt de maintien 7 présente une hauteur lui permettant lorsqu'il est dans sa position sortie, de croiser la trajectoire de la palette de retenue 6 lorsque celle-ci est dans sa position de repos!. Par contre, lorsque la palette de retenue 6 est dans sa position de travail, la trajectoire du doigt de maintien 7 dans sa position sortie coïncide avec une partie de la trajectoire de la palette de retenue 6. Ainsi, lorsque le doigt de maintien 7 est respectivement dans sa position sortie et dans sa position arrière, il est en appui contre la palette de retenue 6 alors respectivement dans sa position amont et dans sa position de travail. De part cette construction particulière, le doigt de maintien 7 en position sortie reste en permanence à l'aval de la palette de retenue 6 en position de travail, supprimant le risque d'empiler des objets plats 2 entre la palette de retenue 6 et le doigt de maintien 7. De plus, de part cette construction particulière, en cas de bourrage, le déplacement de la palette de retenue 6 dans sa position de travail vers sa position aval provoque le déplacement simultané du doigt de maintien 7 vers sa position avant sans nécessiter de geste supplémentaire de la part de l'Opérateur. Le doigt de maintien 7 est mobile, au-delà de la position avant, jusqu'à la position d'escamotage définie par l'encoche latérale 37 de la rainure 35. Selon un mode de réalisation non représenté, le doigt de maintien 7 comporte des moyens de basculement élastiques tendant à le faire basculer dans l'encoche latérale 37. Ainsi, dès que le doigt de maintien 7 est en regard de l'encoche latérale 37 il passe seul de sa position sortie à sa position entrée.

Le doigt de maintien 7 et la palette de retenue 6 sont en permanence au-dessus du plan d'appui P et restent ainsi accessibles par l'Opérateur, quelle que soit leur position. La différence de hauteurs de travail H1, H2 entre la palette de retenue 6 et le doigt de maintien 7 permet d'une part à la palette de retenue 6 d'être pleinement opérationnelle dans sa position de travail même en l'absence du doigt de maintien 7 (dans sa position entrée) pour retenir les objets plats 2 sur toute leur hauteur, d'autre part au doigt de maintien 7 de retenir efficacement le pied des objets plats 2 tout en laissant accès libre au haut des objets plats 2 et ainsi faciliter leur préhension manuelle par l'Opérateur.

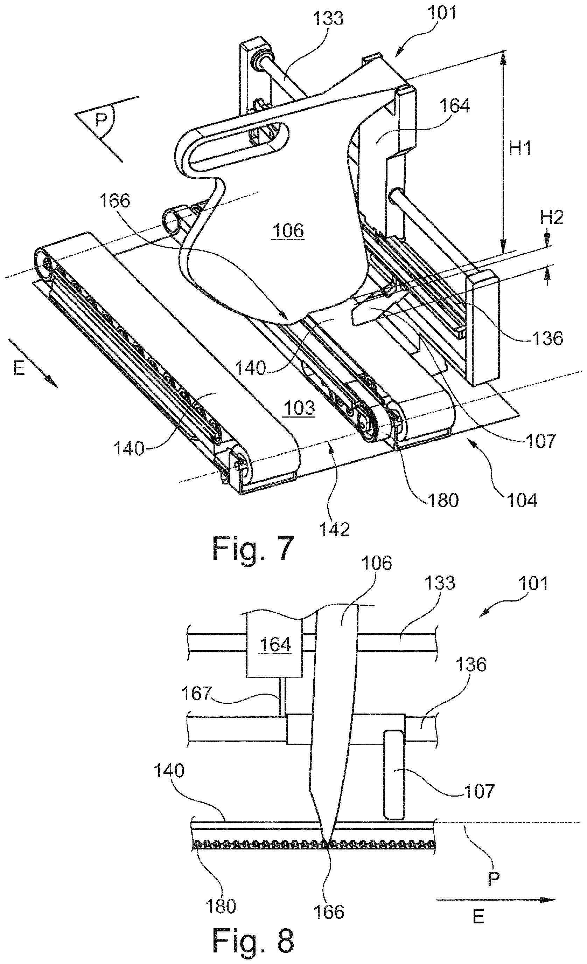

Le dispositif d'empilage 101, selon un mode de réalisation de l'invention et illustré par les figures 7 et 8, est sensiblement similaire au précédent. Le support 104, porté par le bâti 103, comporte deux bandes transporteuses 140 séparées par une zone d'accès 142 dans laquelle est logée une courroie d'entrainement 180. Cette courroie d'entrainement 180 est de type crantée et disposée parallèlement aux bandes transporteuses 140, décalée sous le plan d'appui P. La courroie d'entrainement 180 est couplée en déplacement, par tout moyen connu, aux bandes transporteuses 140 de sorte qu'elles avancent en même temps.

La palette de retenue 106 est guidée par la première glissière 133 et le doigt de maintien 107 est guidé par la seconde glissière 136. La palette de retenue 106 comporte une extension 166 la prolongeant. Ainsi, lorsque la palette de retenue 106 est dans sa position de travail, l'extension 166 traverse le plan d'appui P et vient se loger entre deux crans de la courroie d'entrainement 180. Les déplacements de la palette de retenue 106 et de la courroie d'entrainement 180 sont ainsi liés.

La palette de retenue 106 est pourvue d'une butée 167 (visible sur la figure 8) s'étendant sous le bras 164 et interférant avec la trajectoire du doigt de maintien 107 au niveau de la seconde glissière 136. Ainsi, la butée 167 empêche le doigt de maintien 107 de passer à l'amont de la palette de retenue 106 par rapport à la direction d'empilage E. Le doigt de maintien 107 est bloqué avant que sa surface amont ne soit en contact avec la surface aval de la palette de retenue 106. Le blocage par la butée 167 est effectif quelle que soit la position du doigt de maintien 107 (position entrée, position sortie) et celle de la palette de retenue 106 (position de travail, position de repos).

L'utilisation du dispositif d'empilage 1, 101 est décrite ci-après, de manière non limitative en référence au dispositif d'empilage 1 du premier mode de réalisation. Le dispositif d'empilage 101 selon le second mode de réalisation s'utilise de manière similaire.

En référence à la figure 6, dans une première configuration avant utilisation, la palette de retenue 6 est respectivement dans sa position de repos et dans sa position amont et le doigt de maintien 7 est respectivement dans sa position sortie et dans sa position arrière. Pour l'utilisation du dispositif d'empilage 1, la palette de retenue 6 est basculée de sa position de repos à sa position de travail dans laquelle elle interfère avec la trajectoire d'empilage E des objets plats 2. Le doigt de maintien 7 est alors plaqué devant la palette de retenue 6. L'empilage des objets plats 2 est amorcé à l'arrière de la palette de retenue 6.

Dans une seconde configuration illustrée par la figure 1, la palette de retenue 6 est respectivement dans sa position de travail et dans une position intermédiaire dans laquelle elle a avancé par rapport à sa position amont, poussée par la face des objets plats 2 qui s'empilent derrière elle. Le déplacement vers l'avant de la palette de retenue 6 est freiné par les moyens de freinage (ressort 65 de la figure 6). Dans cette seconde configuration, le doigt de maintien 7 est respectivement dans sa position sortie et dans une position intermédiaire dans laquelle il a avancé par rapport à sa position arrière, poussé par la palette de retenue 6 devant laquelle il est plaqué et le pied des objets plats 2 qui s'empilent derrière la palette de retenue 6. Le déplacement vers l'avant du doigt de maintien 7 est freiné par les moyens de rappel 8. Ainsi, la palette de retenue 6 et le doigt de maintien 7 avancent progressivement au fur et à mesure de la constitution de la pile d'objets plats 2 à l'arrière de la palette de retenue 6. Quelle que soit la forme de la palette de retenue 6, grâce au doigt de maintien 7, il n'y a aucun risque que le pied du premier objet plat 2 ne glisse et ne ripe vers l'avant de la pile. La pile est donc stable au cours de l'empilage.

Dans une troisième configuration non illustrée, la pile a augmenté, la palette de retenue 6 et le doigt de maintien 7 qui ont suivi la progression de l'empilage sont respectivement dans leurs positions aval et avant. II est temps pour l'Opérateur de saisir une poignée 20 d'objets plats 2 pour transférer cette poignée 20 par exemple dans un bac de stockage (non représenté). Pour ce faire, l'Opérateur place sa main gauche au-dessus de l'avant de la pile de sorte que son pouce soit contre la face avant du premier objet plat 2 de la pile (donc de la poignée 20 et que ses autres doigts soient au-dessus de la pile. Avec l'extrémité de ses autres doigts, l'Opérateur délimite la poignée 20 d'objets plats 2 à saisir en rapprochant le haut des objets plats 2 concernés du haut du premier objet plat 2 de la pile.
Dans une quatrième configuration illustrée par la figure 2, une fois la poignée d'objets 2 plats délimitée par les doigts de la main gauche de l'Opérateur, la palette de retenue 6 est escamotée au moyen de la main droite, par basculement autour de l'axe pivotant 60 de sa position de travail à sa position de repos. Dans cette quatrième configuration, la palette de retenue 6 n'interfère plus avec la trajectoire d'empilage E et ne maintient donc plus le devant de la pile d'objets plats 2 qui est retenue par la main de l'Opérateur et par le doigt de maintien 7, toujours dans sa position sortie, qui retient le pied du premier objet plat 2 de la pile. La pile est donc stable et ne risque pas de glisser ni de riper vers l'avant tout en laissant accessible le haut des objets plats 2.

Tout en maintenant le dessus de la pile, l'Opérateur déplace ensuite la palette de retenue 6 de sa position aval vers une position intermédiaire (entre sa position amont et sa position aval) dans laquelle la palette de retenue 6 peut être insérée entre la poignée 20 délimitée par l'Opérateur et le reste de la pile 21.

On obtient ainsi la cinquième configuration illustrée par la figure 3 et dans laquelle la palette de retenue 6 est respectivement dans une position intermédiaire et dans sa position de travail, et le doigt de maintien 7 est respectivement dans sa position sortie et dans une position intermédiaire (entre sa position arrière et sa position avant). Ainsi, le doigt de maintien 7 retient toujours le pied du premier objet plat 2 de la poignée 20, avançant progressivement pour suivre l'empilage qui peut se poursuivre à l'arrière de la palette de retenue 6 et la palette de retenue 6 retient le reste de la pile 21.

Comme illustré par la figure 4, l'Opérateur qui a toujours sa main gauche au-dessus de la poignée 20 d'objets plats 2, introduit sa main droite entre les deux bandes transporteuses 40, sous les objets plats 2 de la poignée 20 puis ramène la poignée 20 vers l'avant. Pendant ce déplacement, le doigt de maintien 7 devance toujours le premier objet plat 2 de la poignée 20 et est déplacé vers sa position avant.

L'Opérateur évacue la poignée 20 d'objets plats 2, laissant selon une cinquième configuration illustrée par la figure 5, le reste de la pile 21 se former à l'arrière de la palette de retenue 6. Si le doigt de maintien 7 ne doit pas être utilisé pour la suite de l'empilage, il peut être escamoté comme illustré. A cet effet, l'Opérateur peut déplacer le doigt de maintien 7 jusqu'à sa position d'escamotage prévue au-delà de la position avant, de sorte que le doigt de maintien 7 soit en regard de l'encoche latérale 37 pour pouvoir être basculé dedans et se trouver dans sa position entrée, escamoté dans la rive de taquage 34 de sorte à ne plus interférer avec la trajectoire d'empilage E. Le doigt de maintien 7 reste bloqué dans l'encoche latérale 37 par le biais des moyens de rappel 8 qui le plaque contre la paroi de l'encoche latérale 37. Le doigt de maintien 7 peut à tout moment être relâché et basculé de sa position entrée à sa position sortie. Selon l'avancement de l'empilage ou l'absence d'objets plats 2 sur les bandes transporteuses 40, il sera alors ramené par les moyens de rappel 8 de sa position d'escamotage à sa position arrière ou toute autre position intermédiaire.

L'Opérateur peut également choisir de laisser le doigt de maintien 7 dans sa position sortie. Dans ce cas, il évacuera la poignée 20 d'objets plats 2 sans amener le doigt de maintien 7 jusqu'à sa position d'escamotage.
Il est bien entendu que l'utilisation des mains gauche et droite peut être inversée. De même, la palette de retenue 6, le doigt de maintien 7 et la rive de taquage 34 peuvent être disposés de manière symétrique par rapport à l'axe médian séparant les deux bandes transporteuses 40.

Il ressort clairement de la description que le doigt de maintien 7 et ladite palette de retenue 6 sont indépendants en mouvement l'un de l'autre ce qui permet au doigt de maintien 7 de continuer à retenir le pied du premier objet plat 2 de la poignée 20 d'objets plats 2 alors que la palette de retenue 6 est escamotée pour être déplacée de sa position aval à une position intermédiaire vers l'arrière pour éventuellement retenir le reste de la pile 21.

Ainsi, grâce au doigt de maintien 7, le pied de l'avant de la pile d'objets plats 2, est en permanence maintenu avec efficacité, le pied du premier objet plat 2 et les objets plats 2 subséquents ne risquant pas de riper ni de glisser vers l'avant de la pile.

## Revendications

1. Dispositif d'empilage (101) pour objets plats (2) empilés sur chant, comportant au moins un support (104) définissant un plan d'appui (P) apte à recevoir ladite pile d'objets plats (2) en formation selon une trajectoire d'empilage (E) prédéfinie, une palette de retenue (106) portée par une première glissière (133) disposée latéralement par rapport audit plan d'appui (P) et sur laquelle ladite palette de retenue (106) est mobile en translation selon ladite trajectoire d'empilage (E) entre une position amont et une position aval, et escamotable manuellement entre une position de travail dans laquelle elle s'étend au-dessus dudit plan d'appui (P) jusqu'à une première hauteur de travail (H1) et interfère avec ladite trajectoire d'empilage (E) pour pouvoir recevoir l'appui de la surface d'un objet plat (2) et une position de repos dans laquelle elle n'interfère pas avec ladite trajectoire d'empilage (E), ladite palette de retenue (106) étant couplée à des moyens de freinage agencés pour s'opposer au déplacement de ladite palette de retenue (106) au cours de l'empilage, ledit dispositif d'empilage (101) comprenant en outre au moins un doigt de maintien (107) apte à être dans une position sortie dans laquelle il s'étend au-dessus dudit plan d'appui (P) jusqu'à une seconde hauteur de travail (H2) inférieure à ladite première hauteur de travail (H1) et interfère avec ladite trajectoire d'empilage (E) pour recevoir l'appui du pied d'un objet plat (2), ledit doigt de maintien (107) étant couplé à des moyens de rappel tendant à s'opposer au déplacement dudit doigt de maintien (107) de sorte à empêcher le glissement vers l'avant de ladite pile du pied dudit objet plat (2), ledit doigt de maintien (107) et ladite palette de retenue (106) étant agencés pour être indépendants l'un de l'autre de sorte que ledit doigt de maintien (107) soit apte à retenir ledit pied d'objet plat (2) même lorsque ladite palette de retenue (106) est dans sa position de repos,
**caracterisé en ce que** ledit doigt de maintien (107) en position sortie est en outre agencé pour être poussé par ladite palette de retenue (106) en position de travail quand celle-ci est déplacée vers sa position aval de sorte que ladite palette de retenue (106) et le doigt de maintien (107) avancent progressivement au fur et à mesure de la constitution de ladite pile d'objets plats (2) à l'arrière de ladite palette de retenue (106), **en ce que** ledit support (104) est formé par deux bandes transporteuses (140) parallèles entre elles et distantes l'une de l'autre de sorte à ménager entre elles une zone d'accès (142) apte à recevoir le passage d'une main d'un Opérateur pour accéder par le dessous dudit plan d'appui (P) auxdits objets plats (2), **en ce que** le dispositif d'empilage (101) comporte au moins une courroie d'entrainement (180) prévue sous ledit plan d'appui (P) entre lesdites bandes transporteuses (140) et couplée en déplacement auxdites bandes transporteuses (140), **en ce que** ladite palette de retenue (106) comporte une extension (166) agencée pour, dans ladite position de travail de ladite palette de retenue (106), traverser ledit plan d'appui (P) et être en appui contre ladite courroie d'entrainement (180) de sorte que ladite palette de retenue (106) soit couplée en déplacement à ladite courroie d'entrainement (180), et **en ce que** l'un au moins desdits doigt de maintien (107) et palette de retenue (106) comporte une butée (167) agencée pour venir en appui respectivement contre ladite palette de retenue (106), ledit doigt de maintien (107), et empêcher le déplacement dudit doigt de maintien (107) vers l'amont de ladite palette de retenue (106) selon ladite trajectoire d'empilage (E), ledit doigt de maintien (107) étant bloqué avant que sa surface amont ne soit en contact avec la surface aval de la palette de retenue (106), ledit doigt de maintien (107) étant porté par une seconde glissière (136) distincte de ladite première glissière (133), disposée latéralement par rapport audit plan d'appui (P) du même coté que ladite première glissière (133) et sur laquelle ledit doigt de maintien (107) est mobile en translation selon ladite trajectoire d'empilage (E) entre une position arrière et une position avant.

2. Dispositif d'empilage (101) selon la revendication 1, **caractérisé en ce que**, ladite première glissière (133) et ladite seconde glissière (136) sont prévues dans un plan de guidage (G) perpendiculaire audit plan d'appui (P).

3. Dispositif d'empilage (101) selon au moins l'une des revendications précédentes, **caractérisé en ce que** ledit doigt de maintien (107) est agencé pour, dans une position d'escamotage prévue au-delà de ladite position avant, être de plus escamotable de ladite position sortie à une position entrée dans laquelle il n'interfère pas avec ladite trajectoire d'empilage (E).

4. Dispositif d'empilage (101) selon au moins l'une des revendications précédentes, **caractérisé en ce qu'**il comporte au moins une rive de taquage (134) apte à guider latéralement lesdits objets plats (2) selon ladite trajectoire d'empilage (E), ladite une rive de taquage (134) comportant au moins une rainure (135) définissant ladite seconde glissière (136).

5. Dispositif d'empilage (101) selon les revendications 3 et 4, **caractérisé en ce que** ladite rainure (135) comporte au moins une encoche latérale apte à recevoir ledit doigt de maintien (107) dans sa position entrée et définissant ladite position d'escamotage, ledit doigt de maintien (107) étant agencé pour pivoter par rapport à un axe sensiblement parallèle à ladite trajectoire d'empilage (E) entre ses positions sortie et escamotée.

6. Dispositif d'empilage (101) selon au moins l'une des revendications précédentes, **caractérisé en ce que** lesdits moyens de rappel comportent au moins l'un des éléments choisis dans le groupe comprenant au moins un élément de rappel élastique, un contrepoids.

7. Machine de tri postal comprenant des sorties de tri pourvues de dispositifs d'empilage, **caractérisé en ce qu'**elle comporte au moins un dispositif d'empilage (101) selon au moins l'une des revendications 1 à 6.

## Patentansprüche

1. Stapelvorrichtung (101) für auf Kante gestapelte flache Gegenstände (2), umfassend wenigstens eine Abstützung (104), die eine Stützebene (P) definiert, die in der Lage ist, den in Bildung begriffenen Stapel flacher Gegenstände (2) gemäß einer vorbestimmten Stapelstrecke (E) aufzunehmen, eine Halteplatte (106), die von einer seitlich in Bezug auf die Stützebene (P) angeordneten ersten Führung (133) getragen ist und auf der die Halteplatte (106) gemäß der Stapelstrecke (E) zwischen einer stromaufwärtigen Position und stromabwärtigen Position translatorisch beweglich ist, und die manuell zwischen einer Arbeitsposition, in der sie sich oberhalb der Stützebene (P) bis zu einer ersten Arbeitshöhe (H1) erstreckt und mit der Stapelstrecke (E) interferiert, um die Fläche eines flachen Gegenstands (2) abzustützen, und einer Ruheposition, in der sie nicht mit der Stapelstrecke (E) interferiert, eskamotierbar ist, wobei die Halteplatte (106) mit Bremsmitteln gekoppelt ist, die ausgebildet sind, um sich der Verlagerung der Halteplatte (106) während des Stapelns entgegenzustellen, wobei die Stapelvorrichtung (101) ferner wenigstens einen Haltefinger (107) umfasst, der in der Lage ist, eine ausgerückte Position einzunehmen, in der er sich oberhalb der Stützebene (P) bis zu einer zweiten Arbeitshöhe (H2), die geringer ist als die erste Arbeitshöhe (H1), erstreckt und mit der Stapelstrecke (E) interferiert, um den Fuß eines flachen Gegenstands (2) abzustützen, wobei der Haltefinger (107) mit Vorspannmitteln gekoppelt ist, die dazu neigen, sich der Verlagerung des Haltefingers (107) entgegenzustellen, um das Gleiten des Stapels vom Fuße des flachen Gegenstands (2) nach vorne zu verhindern, wobei der Haltefinger (107) und die Halteplatte (106) ausgebildet sind, um voneinander unabhängig zu sein derart, dass der Haltefinger (107) in der Lage ist, den Fuß des flachen Gegenstands (2) selbst dann zu halten, wenn die Halteplatte (106) in ihrer Ruheposition ist,
**dadurch gekennzeichnet,**
**dass** der Haltefinger (107) in ausgerückter Position ferner ausgebildet ist, um durch die Halteplatte (106) in Arbeitsposition verschoben zu werden, wenn diese zu ihrer stromabwärtigen Position verlagert wird derart, dass die Halteplatte (106) und der Haltefinger (107) allmählich im Zuge der Bildung des Stapels flacher Gegenstände (2) auf der Rückseite der Halteplatte (106) vorrücken,
**dass** die Abstützung (104) durch zwei zueinander parallele und voneinander beabstandete Transportbänder (140) gebildet ist derart, dass zwischen ihnen eine Zugangszone (142) gebildet ist, die in der Lage ist, den Durchgang einer Hand einer Bedienperson für den Zugang zu den flachen Gegenständen (2) von unterhalb der Stützebene (P) zu erlauben,
**dass** die Stapelvorrichtung (101) wenigstens einen Antriebsriemen (180) umfasst, der unter der Stützebene (P) zwischen den Transportbändern (140) vorgesehen ist und mit den Transportbändern (140) in Verlagerung gekoppelt ist,
**dass** die Halteplatte (106) einen Fortsatz (166) umfasst, der ausgebildet ist, um in der Arbeitsposition der Halteplatte (106) die Stützebene (P) zu durchsetzen und sich gegen den Antriebsriemen (180) derart abzustützen, dass die Halteplatte (106) in Verlagerung mit dem Antriebsriemen (180) gekoppelt ist, und
**dass** wenigstens eines von Haltefinger (107) und Halteplatte (106) einen Anschlag (167) aufweist, der ausgebildet ist, um jeweils gegen die Halteplatte (106), den Haltefinger (107) in Anlage zu gelangen und die Verlagerung des Haltefingers (107) nach stromaufwärts der Halteplatte (106) gemäß der Stapelstrecke (E) zu verhindern, wobei der Haltefinger (107) blockiert wird, bevor seine stromaufwärtige Fläche in Kontakt mit der stromabwärtigen Fläche der Halteplatte (106) gelangt, wobei der Haltefinger (107) von einer von der ersten Führung (133) verschiedenen zweiten Führung (136) getragen ist, die seitlich in Bezug auf die Stützebene (P) auf derselben Seite wie die erste Führung (133) angeordnet ist und auf der der Haltefinger (107) translatorisch gemäß der Stapelstrecke (E) zwischen einer hinteren Position und einer vorderen Position beweglich ist.

2. Stapelvorrichtung (101) nach Anspruch 1, **dadurch gekennzeichnet, dass** die erste Führung (133) und die zweite Führung (136) in einer zu der Stützebene (P) senkrechten Führungsebene (G) vorgesehen sind.

3. Stapelvorrichtung (101) nach zumindest einem der vorhergehenden Ansprüche, **dadurch gekennzeichnet, dass** der Haltefinger (107) ausgebildet ist, um in einer jenseits der vorderen Position vorgesehenen eskamotierten Position zusätzlich von der ausgerückten Position zu einer eingerückten Position, in der er nicht mit der Stapelstrecke (E) interferiert, eskamotierbar zu sein.

4. Stapelvorrichtung (101) nach zumindest einem der vorhergehenden Ansprüche, **dadurch gekennzeichnet, dass** sie wenigstens einen Laufrand (134) umfasst, der in der Lage ist, die flachen Gegenstände (2) gemäß der Stapelstrecke (E) seitlich zu führen, wobei der Laufrand (134) wenigstens eine Nut (135) umfasst, die die zweite Führung (136) definiert.

5. Stapelvorrichtung (101) nach den Ansprüchen 3 und 4, **dadurch gekennzeichnet, dass** die Nut (135) mindestens eine seitliche Auskerbung umfasst, die in der Lage ist, den Haltefinger (107) in seiner eingerückten, die eskamotierte Position definierenden Position aufzunehmen, wobei der Haltefinger (107) ausgebildet ist, um in Bezug auf eine im Wesentlichen parallel zu der Stapelstrecke (E) verlaufenden Achse zwischen seinen ausgerückten und eskamotierten Positionen zu schwenken.

6. Stapelvorrichtung (101) nach zumindest einem der vorhergehenden Ansprüche, **dadurch gekennzeichnet, dass** die Vorspannmittel wenigstens eines der Elemente umfassen, die ausgewählt sind aus der Gruppe umfassend zumindest ein elastisches Vorspannmittel, ein Gegengewicht.

7. Postsortiermaschine, umfassend Sortierausgänge, die mit Stapelvorrichtungen versehen sind, **dadurch gekennzeichnet, dass** sie wenigstens eine Stapelvorrichtung (101) nach einem der Ansprüche 1 bis 6 umfasst.

## Claims

1. A stacker device (101) for flat articles (2) stacked on edge, said device including at least one support (104) defining a bearing plane (P) suitable for receiving said stack of flat articles (2) being formed along a predefined stacking path (E), a retaining paddle (106) carried by a first slideway (133) disposed laterally relative to said bearing plane (P) and along which said retaining paddle (106) is mounted to be moveable in translation along said stacking path (E) between an upstream position and a downstream position, and to be retractable manually between a working position in which it extends above said bearing plane (P) to a first working height (H1) and interferes with said stacking path (E) so as to receive the surface of a flat article (2) bearing against it and a resting position in which it does not interfere with said stacking path (E), said retaining paddle (106) being coupled to braking means arranged to oppose movement of said retaining paddle (106) during stacking, said stacker device further comprising at least one holding finger (107) suitable for being in a deployed position in which it extends above said bearing plane (P) to a second working height (H2) less than said first working height (H1) and interferes with said stacking path (E) so as to receive the foot of a flat article (2) bearing against it, said holding finger (107) being coupled to return means tending to oppose movement of said holding finger (107) so as to prevent the foot of said flat article (2) from slipping towards the front of said stack, said holding finger (107) and said retaining paddle (106) being arranged to be independent from each other so that said holding finger (107) is suitable for retaining said foot of the flat article (2) even when said retaining paddle (106) is in its resting position, **characterized in that** said holding finger (107) in a extended position is further arranged to be pushed by said retaining paddle (106) in a working position when the latter is moved to its downstream position so that said retaining paddle (106) and the holding finger (107) advance gradually as the stack of said stack of flat articles (2) is being formed behind said retaining paddle (106), **in that** said support (104) is formed by two conveyor belts (140) that are mutually parallel and that are spaced apart from each other so as to provide an access zone (142) between them that is suitable for receiving the hand of an operator passing through from below said bearing plane (P) to access said flat articles (2), **in that** the stacker device (101) includes at least one drive belt (180) provided under said bearing plane (P) between said conveyor belts (140) and coupled to said conveyor belts (140) so as to move therewith, **in that** said retaining paddle (106) includes an extension (166) arranged so that, when said retaining paddle (106) is in said working position, said extension passes through said bearing plane (P) and bears against said drive belt (180) so that said retaining paddle (106) is coupled to said drive belt (180) so as to move therewith, and **in that** at least one of the elements comprising said holding finger (107) and said retaining paddle (106) has an abutment (167) arranged to come to bear respectively against said retaining paddle (106) or against said holding finger (107), and to prevent said holding finger (107) from moving upstream from said retaining paddle (106) along said stacking path (E), said holding finger (107) being blocked until its upstream surface is in contact with the downstream surface of the retaining paddle (106), said holding finger (107) being supported by a second slideway (136) different from the first slideway (133) which is provided laterally along said stacking path (E) on the same side of the first slideway (133) and on which the holding finger (107) is movable in translation according to said stacking path (E) between downstream position and upstream position.

2. A stacker device (101) according to claim 1, **characterized in that** said first slideway (133) and said second slideway (136) are provided in a guide plane (G) that is perpendicular to said bearing plane (P).

3. A stacker device (101) according to at least one of the preceding claims, **characterized in that** said holding finger (107) is arranged so that, when it is in a retraction position provided beyond said front position, it is also retractable from said deployed position to a retracted position in which it does not interfere with said stacking path (E).

4. A stacker device (101) according to at least one of the preceding claims, **characterized in that** it includes at least one jogging strip (134) suitable for guiding said flat articles (2) laterally along said stacking path (E), said jogging strip (134) being provided with at least one groove (135) defining said second slideway (136).

5. A stacker device (101) according to claims 3 and 4, **characterized in that** said groove (135) is provided with at least one lateral notch suitable for receiving said holding finger (107) in its retracted position and defining said retraction position, said holding finger (107) being arranged to pivot relative to an axis that is substantially parallel to said stacking path (E) to go between its deployed position and its retracted position.

6. A stacker device (101) according to at least one of the preceding claim, **characterized in that** said return means comprise at least one of the elements chosen from the group comprising at least one resilient return element and a counterweight.

7. A postal sorting machine having sorting outlets provided with stacker devices, said postal sorting machine being **characterized in that** it includes at least one stacker device (101) according to at least one of claims 1 to 6.
